# EUROPÄISCHE PATENTANMELDUNG

(11) **EP 2 096 514 A2**
(43) Veröffentlichungstag der Anmeldung: **02.09.2009**
(21) Anmeldenummer: 08005596.5
(22) Anmeldetag: 26.03.2008
(51) Int. Cl.: G06F 1/16

(54) **Dockingstation für ein mobiles elektronisches Gerät**

(30) Priorität: 26.02.2008 EP 08003457
(71) Anmelder: ads-tec GmbH, 70771 Leinfelden-Echterdingen (DE)
(72) Erfinder: Speidel, Thomas, 71706 Markgröningen (DE)
(74) Vertreter: Wasmuth, Rolf

(57) **Zusammenfassung**

Die Erfindung betrifft eine Dockingstation zur Verbindung eines mobilen elektronischen Datenanzeigegerätes (2) mit einer Datenleitung (3), einer Energieversorgung (4) oder dgl.. Die Dockingstation besteht aus einer Aufnahme (6) für das mobile Gerät (2) sowie einem Steckanschluss (7) zur elektrischen Verbindung des elektronischen Gerätes (2) mit der Dockingstation (1). In dem Gehäuse (8) der Dockingstation (1) sind ein Prozessor (11), ein Arbeitsspeicher (9) sowie ein Massenspeicher (12) vorgesehen, wobei im Gehäuse (8) Anwendungen zur Verarbeitung von Daten ablaufen, die von dem mobilen elektronischen Gerät (2) erfasst und von dem mobilen elektronischen Gerät (2) der Dockingstation (1) zur Verfügung gestellt sind.

## Beschreibung

Die Erfindung betrifft eine Dockingstation zur Verbindung eines mobilen elektronischen Gerätes, insbesondere eines Datenanzeigegerätes mit einer Datenleitung, einer Energieversorgung oder dgl. nach dem Oberbegriff des Anspruchs 1.

Dockingstationen sind allgemein bekannt. Sie dienen der Verbindung von elektronischen Geräten mit Datenleitungen und/oder einer Energieversorgung. Nach Einstecken des Gerätes in die Dockingstation wird z. B. der Geräteakku aufgeladen. Meist wird auch eine Datenverbindung hergestellt, um einen Datenaustausch mit einem Server oder dgl. zu ermöglichen. Dockingstationen, auch Cradle genannt, können auch als Portreplikatoren dienen, um die Anzahl der Schnittstellen wie PS2, USB oder Firewire zum Anschluss von CD-, DVD- oder Diskettenlaufwerken zu erhöhen.

Im Kraftfahrzeugservicebereich werden Fahrzeugdaten über Fahrzeug-Schnittstellen ausgelesen, um anhand dieser Daten z. B. eine Fehlerdiagnose zu erstellen, zu wartende Teile zu identifizieren oder installierte Software upzudaten. Hierzu werden überwiegend mobile PCs wie Laptops, Tablett-PCs oder dgl. verwendet, auf denen die notwendigen Applikationen und Programme zur Auswertung der am Serviceanschluss ausgelesenen Daten ablaufen.

Bei mobilen PCs muss eine ausreichende Energieversorgung zum Betrieb des Prozessors, des Arbeitsspeichers und/oder der Massespeicher zur Verfügung gestellt sein. Je leistungsfähiger ein mobiler PC ist, desto mehr Energie verbraucht er im Betrieb.

Die mobilen PCs innerhalb einer Werkstatt müssen regelmäßig gewartet und upgedatet werden; jede Softwareänderung muss auf jedem mobilen PC eingerichtet werden.

Der Erfindung liegt die Aufgabe zugrunde, bei einem Servicesystem mit einem oder mehreren mobilen Geräten den technischen Aufwand zu senken und dennoch eine hohe Leistung zur Verfügung zu stellen.

Die Aufgabe wird erfindungsgemäß nach den kennzeichnenden Merkmalen des Anspruchs 1 gelöst.

Die Integration eines Computers in der Dockingstation hat den Vorteil, dass die mobilen PCs in ihrer technischen Ausstattung minimalisiert werden können. Das mobile elektronische Gerät selbst muss nicht mehr eine ausreichende Leistung aufweisen, um mächtige Applikationen und Programme zu bewältigen. Das mobile elektronische Gerät muss nur noch in der Lage sein, die zu verarbeitenden Daten zu erfassen und der Dockingstation zur Verfügung zu stellen. Das mobile elektronische Gerät kann mit einer minimalen elektronischen Ausstattung den gestellten Anforderungen genügen, wobei aufgrund der minimalen Ausstattung der Energiebedarf gering ist. Dadurch kann eine hohe Standzeit erreicht und das Gewicht des mobilen elektronischen Gerätes gesenkt werden.

In vorteilhafter Weiterbildung der Erfindung ist im Gehäuse der Dockingstation ein Access Point in Form eines Funkmoduls zur Datenübertragung angeordnet. Ein derartiges Funkmodul ist zweckmäßig ein WLAN-Modul, kann aber auch ein Bluetooth-Modul, ein Infrarot-Modul oder dgl. Modul sein. Das mobile elektronische Gerät kann somit die erfassten Daten drahtlos an den Access Point weitergeben, damit diese innerhalb der Dockingstation verarbeitet werden. Die Ausführung ist dabei so getroffen, dass das mobile elektronische Gerät als "Thin Client" die erfassten Daten drahtlos an die Dockingstation überträgt, dort die Daten ausgewertet und verarbeitet werden und das erhaltene Ergebnis als Bilddaten dem Thin Client zurück übermittelt werden. Der Thin Client zeigt diese Bilddaten an, womit dem Benutzer am Fahrzeug die Auswertung der am Serviceanschluss ausgelesenen und an die Dockingstation übermittelten Daten vorliegt.

Das Funkmodul ist zweckmäßig auf der Hauptplatine des in der Dockingstation angeordneten Computers vorgesehen, wobei die Funkantenne des Funkmoduls innerhalb oder auch außerhalb des Gehäuses angeordnet sein kann.

In besonderer Weiterbildung der Erfindung ist der in der Dockingstation angeordnete Computer mit einem ersten Betriebssystem betrieben, während das Funkmodul selbst mit einem zweiten Betriebssystem betrieben ist. Zweckmäßig ist das erste Betriebssystem ein WINDOWS System und das zweite Betriebssystem ein LINUX System. Diese unterschiedlichen Betriebssysteme laufen bevorzugt auf einem MultiCore Prozessor ab, der als CPU-Einheit in dem in der Dockingstation integrierten Computer vorgesehen ist. Dabei kann auf einem ersten Core das erste Betriebssystem und auf einem zweiten Core das zweite Betriebssystem laufen.

Da die Dockingstation über einen Netzwerkanschluss mit einem Server in Verbindung steht, können größere Datenmengen auch von einem zentralen Server abgerufen werden.

Das Gehäuse der Dockingstation ist staub- und feuchtigkeitsdicht ausgeführt, insbesondere nach Schutzklasse IP65 ausgeführt. Dadurch ist gewährleistet, dass die Dockingstation innerhalb des Werkstattbereichs problemlos eingesetzt werden kann.

Zur Abführung der innerhalb des Gehäuses entstehenden Verlustwärme weist die Dockingstation einen Gebläseschacht auf, der von einem äußeren Kühlluftstrom durchströmt ist. So kann die Wärme innerhalb des dichten Gehäuses der Dockingstation über den Gebläseschacht abgeführt werden. Die zu kühlenden Bauteile und/oder Baugruppen innerhalb des Gehäuses sind dabei zweckmäßig über eine Heatpipe mit dem Gebläseschacht verbunden.

Weitere Merkmale der Erfindung ergeben sich aus den weiteren Ansprüchen, der Beschreibung und der Zeichnung, in denen nachfolgend im Einzelnen beschriebene Ausführungsbeispiele der Erfindung dargestellt sind. Es zeigen:
- Fig. 1: in schematischer Darstellung eine erfindungsgemäße Dockingstation für ein mobiles Datenanzeigegerät,
- Fig. 2: in schematischer Darstellung eine Prinzipanordnung eines Netzes mit mobilen Geräten und Dockingstationen,
- Fig. 3: in perspektivischer Darstellung ein konstruktives Ausführungsbeispiel einer Dockingstation.

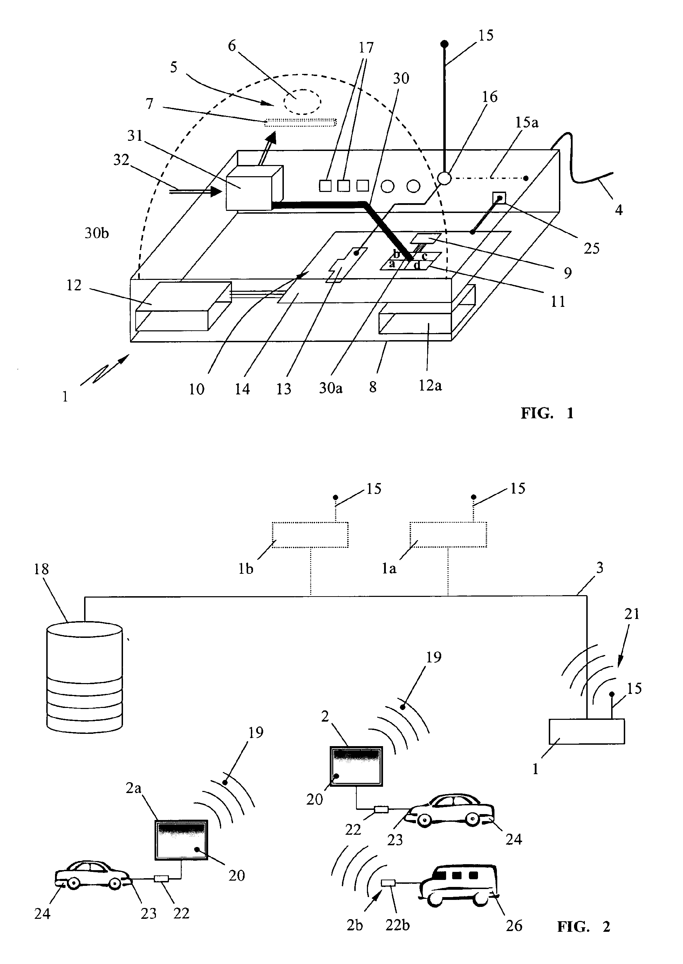

Die in Fig. 1 gezeigte Dockingstation 1 dient der Verbindung eines mobilen elektronischen Gerätes 2 mit einer Datenleitung 3, einer Energieversorgung 4 oder dgl. ortsfesten Anschlüssen. Die Dockingstation 1 zeigt eine Aufnahme 5 für das mobile Gerät 2, das im gezeigten Ausführungsbeispiel ein Datenanzeigegerät, Datenerfassungsgerät oder dgl. sein kann. Die Aufnahme 5 besteht aus einer mechanischen Halterung 6 sowie einem Steckanschluss 7, dem eine entsprechende Buchse an dem elektronischen Gerät 2 zugeordnet ist. Der Steckanschluss 7 dient der elektrischen Verbindung des elektronischen Gerätes 2 mit der Dockingstation 1, wobei diese elektrische Verbindung eine Energieverbindung, eine Datenverbindung oder eine Busverbindung sein kann.

Im Gehäuse 8 der Dockingstation 1 ist gemäß der Erfindung ein leistungsfähiger Computer 10 integriert, der aus einem Prozessor 11 als CPU-Einheit, einem Arbeitsspeicher 9 in Form von RAM-Modulen sowie einem Massespeicher 12 in Form einer Festplatte besteht. Im gezeigten Ausführungsbeispiel hat der in der Dockingstation 1 integrierte Computer 10 eine RAID-Festplattenanordnung aus zwei Festplatten 12 und 12a.

In der Dockingstation 1 ist ferner ein Access Point 21 integriert, wozu ein entsprechendes Funkmodul 13 im Gehäuse 8 angeordnet ist, welches der Datenübertragung dient. Das Funkmodul ist bevorzugt als WLAN-Funkmodul ausgebildet, kann aber auch ein Bluetooth-Modul, ein Infrarot-Modul oder ein anderes drahtloses Datenübertragungsmodul sein.

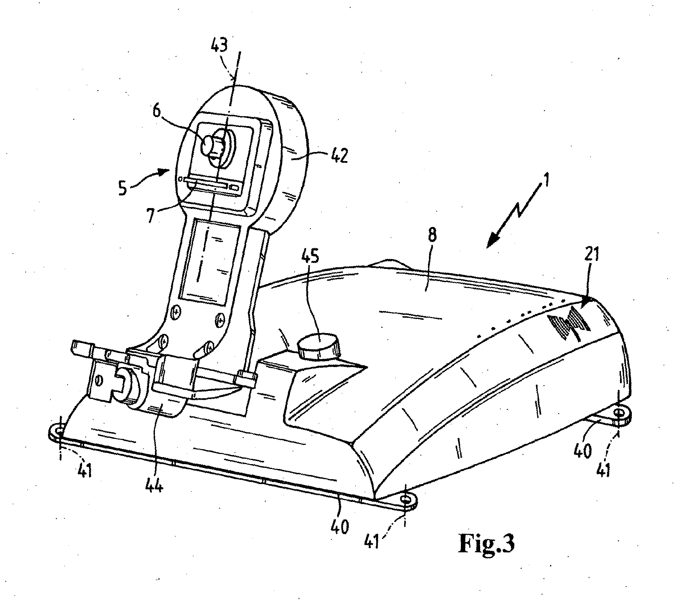

In bevorzugter Ausführungsform ist das Funkmodul 13 auf der Hauptplatine 14 des Computers 10 gesteckt. Die Antenne 15 des Funkmoduls ist in der Darstellung nach Fig. 1 als Außenantenne dargestellt; es kann zweckmäßig sein, die Funkantenne 15a innerhalb des Gehäuses 8 vorzusehen, wie es in Fig. 3 angedeutet ist. Um eine gute Funkabdeckung zu haben, kann es zweckmäßig sein, mehrere Funkantennen an unterschiedlichen Stellen des Gehäuses vorzusehen.

Die Prozessoreinheit 11 ist als so genannter MultiCore Prozessor ausgelegt, im gezeigten Ausführungsbeispiel als QuadCore. Die Cores a, b, c und d werden entsprechend der Auslegung und dem Einsatz des Computers 10 betrieben. Nach der Erfindung ist zumindest einer der Cores a, b, c oder d ausschließlich dem Betrieb des Access Points 21, d. h. dem Funkmodul 13 zugeordnet, während ein oder mehrere andere Cores a, b, c oder d dem Betrieb des Computers 10 dienen. Zweckmäßig wird der Computer 10 und das Funkmodul 13 mit unterschiedlichen Betriebssystemen betrieben, wobei das Funkmodul 13 des Access Points vorteilhaft unter dem Betriebssystem LINUX (eingetragenes Warenzeichen) und der Computer 10 zweckmäßig unter dem Betriebssystem WINDOWS (eingetragenes Warenzeichen) betrieben werden.

Der MultiCore Prozessor 11 nutzt die Ressourcen des Computers 10 wie Arbeitsspeicher, Flashspeicher, Massespeicher einerseits zum Betrieb des Access Points 21 und andererseits zum Betrieb des Computers 10. Durch diese gemeinsame Infrastruktur innerhalb der Dockingstation 1 können Ressourcen eingespart werden.

Neben dem LAN-Netzwerkanschluss 26 und dem Netzkabel 4 kann das Gehäuse 8 der Dockingstation 1 noch eine Antennenbuchse 16 zum Anschluss der Außenantenne 15 aufweisen. Daneben sind z. B. auf der Rückseite des Gehäuses 8 weitere Anschlüsse 17 vorgesehen, z. B. USB-Anschlüsse, Bildschirmanschlüsse oder auch Steckschlitze für Speicherkarten oder dgl..

In dem in Fig. 2 gezeigten Netzwerk sind ein oder mehrere Dockingstationen 1, 1a, 1b mit einem gemeinsamen Netzwerk 3 verbunden, welches mit einem zentralen Server 18 kommuniziert. Über die Funkantennen 15 ist ein Wireless-LAN-Netzwerk 19 geschaffen, in welchem die mobilen elektronischen Geräte 2, 2a, 2b arbeiten. Bevorzugt ist ein derartiges mobiles elektronisches Gerät 2, 2a ein Datenanzeigegerät, welches im Wesentlichen einen Bildschirm 20 sowie eine interne Elektronik aufweist, die ohne Festplatte oder andere drehenden Teile ausgeführt ist. Die auch als Clients bezeichneten Geräte 2, 2a kommunizieren innerhalb des WLAN-Netzes 19 mit dem Access Point 21 einer Dockingstation 1. Dabei sind die mobilen elektronischen Geräte 2, 2a so ausgeführt, dass Anwendungen und Applikationen auf der Dockingstation 1 ablaufen und die mobilen elektronischen Geräte 2, 2a im Wesentlichen nur Daten auf dem Bildschirm 20 anzeigen. Die Bilddaten werden dabei von der Dockingstation 1 übermittelt und auf dem Bildschirm 20 sichtbar gemacht.

Als zweite Funktion werden die mobilen elektronischen Geräte 2, 2a zweckmäßig über einen Adapter 22 mit dem Serviceanschluss 23 eines Fahrzeugs 24 verbunden. Das mobile Gerät 2, 2a erfasst die Daten des Fahrzeugs 24 und gibt sie über das WLAN-Netz 19 an den Access Point 21 der Dockingstation 1 weiter. Dort werden die Fahrzeugdaten verarbeitet und als Antwort Bilddaten übermittelt, die auf dem Bildschirm 20 des Gerätes 2, 2a sichtbar gemacht werden. Der am Fahrzeug 24 sich aufhaltende Servicetechniker hat so die notwendigen Informationen und Anweisungen, was am Fahrzeug auszuführen ist.

Müssen eventuell fahrzeugspezifische Daten wie Ersatzteillisten, Reparaturanweisungen oder dgl. abgerufen werden, so erfolgt dies in ähnlicher Weise über die mobilen Geräte 2, 2a, die auch aufgrund ihrer minimalistischen Ausstattung als "Thin Client" bezeichnet werden können. Die Anfrage wird an die Dockingstation 1 übermittelt, dort abgearbeitet und - falls erforderlich - die Daten vom zentralen Server 18 abgerufen. Die angeforderten Daten werden dann als Bilddaten den Thin Clients 2, 2a übermittelt und dort auf dem Bildschirm 20 angezeigt.

Da die Thin Clients 2, 2a minimalistisch ausgestattet sind, ist deren Energieverbrauch gering. Die zu verwendenden Akkus können daher klein und leicht ausgeführt werden, so dass das Gesamtgewicht eines Thin Clients 2, 2a gesenkt und dessen Standzeit erhöht ist.

Es kann zweckmäßig sein, ein Fahrzeug 26 mit einem sendenden Adapter 22b auszuführen, der entweder unmittelbar mit dem Access Point 21 in Verbindung tritt oder aber zunächst mit dem Thin Client drahtlos kommuniziert, der die Daten über das WLAN-Netzwerk 19 an die Dockingstation 1 weitergibt. Die Thin Clients 2, 2a können somit auch als Router bezeichnet werden, welcher zwischen Fahrzeug und der auf dem Rechner ablaufenden Applikation geschaltet ist.

Da die Dockingstation 1 im Werkstattbereich betrieben wird, ist es zweckmäßig, das Gehäuse staub- und feuchtigkeitsdicht nach Schutzklasse IP65 auszuführen. Bei dieser Schutzklasse ist ein Kühlen der im Gehäuse 8 vorhandenen Bauteile und Baugruppen mittels Kühlluft nicht möglich, weshalb vorgesehen ist, die zu kühlenden Bauteile und/oder Baugruppen über eine Heatpipe 30 zu kühlen. Wie in Fig. 1 gezeigt, ist eine derartige Heatpipe 30 mit einem Ende 30a in wärmeübertragender Verbindung mit dem CPU-Prozessor 11 und am anderen Ende 30b mit einem Gebläseschacht 31 in Verbindung. Die Heatpipe 30 transportiert die am Prozessor 11 anfallende Verlustwärme zum Gebläseschacht 31, der von außen von Kühlluft 32 durchströmt ist und so die Wärme innerhalb des dichten Gehäuses 8 abführt. Der Gebläseschacht 31 bildet somit die wärmeübertragende Schnittstelle zwischen dem staub-, luft- und feuchtigkeitsdichten Gehäuse 8 und einem äußeren Kühlluftstrom 32. Dieser äußere Kühlluftstrom 32 kann mittels eines Ventilators erzeugt werden, der im Kühlschacht 31 angeordnet ist und so zur Reparatur und Wartung frei zugänglich bleibt, ohne dass das dichte Gehäuse 8 geöffnet werden müsste.

Wie Fig. 3 zeigt, besteht die Dockingstation aus dem Gehäuse 8 mit dem darin integrierten Computer sowie dem Access Point 21. Dieses Gehäuse kann mittels Montageschienen 40 auf einer nicht dargestellten festen Unterlage montiert werden, wozu die Montageschienen 40 endseitig die Bodenplatte des Gehäuses 8 überragen und Befestigungsöffnungen 41 aufweisen. Am Gehäuse ist - bevorzugt schwenkbar - ein Tragarm 42 vorgesehen, der an seinem freien Ende die mechanische Halterung 6 für das aufzusetzende mobile elektronische Gerät 2 aufweist. Unterhalb der mechanischen Halterung ist - quer zur Längsachse 43 des Tragarms 42 - der Steckanschluss 7 vorgesehen, der im gezeigten Ausführungsbeispiel als Stecker oder Buchse ausgebildet ist. Der Stecker bzw. die Buchse greift in eine entsprechende Buchse bzw. Stecker auf der Rückseite des mobilen elektronischen Gerätes 2 ein.

Zur Sicherung des am Tragarm 42 festgelegten mobilen Gerätes 2 ist eine Verriegelung 44 am gehäusenahen Ende des Tragarms 42 vorgesehen. Im gezeigten Ausführungsbeispiel ist diese als Schloss ausgestaltet; andere Ausführungen können zweckmäßig sein.

Der Tragarm 42 ist nach Drücken einer Entriegelungstaste 45 verschwenkbar, wobei er in konstruktiv vorgegebenen Raststellungen entsprechend der gewünschten Kipplage des Tragarms 42 festlegbar ist.

## Patentansprüche

1. Dockingstation zur Verbindung eines mobilen elektronischen Gerätes (2), insbesondere eines Datenanzeigegerätes, mit einer Datenleitung (3), einer Energieversorgung (4) oder dgl., bestehend aus einer Aufnahme (5) für das mobile Gerät (2) sowie einem Steckanschluss (7) zur elektrischen Verbindung des elektronischen Gerätes (2) mit der Dockingstation (1) und mit einem Gehäuse (8),
**dadurch gekennzeichnet, dass** im Gehäuse (8) der Dockingstation (1) ein Prozessor (11), ein Arbeitsspeicher (9) sowie ein Massespeicher (12) vorgesehen ist, und dass im Gehäuse (8) Anwendungen zur Verarbeitung von Daten ablaufen, die von dem mobilen elektronischen Gerät (2) erfasst und von dem mobilen elektronischen Gerät (2) der Dockingstation (1) zur Verfügung gestellt sind.

2. Dockingstation nach Anspruch 1,
**dadurch gekennzeichnet, dass** im Gehäuse (8) der Dockingstation (1) ein Access Point (21), vorzugsweise in Form eines Funkmoduls (13) zur Datenübertragung angeordnet ist.

3. Dockingstation nach Anspruch 2,
**dadurch gekennzeichnet, dass** das Funkmodul (13) ein WLAN-Modul ist.

4. Dockingstation nach Anspruch 2 oder 3,
**dadurch gekennzeichnet, dass** das Funkmodul (13) auf der Hauptplatine (14) des in der Dockingstation (1) angeordneten Computers (10) gesteckt ist.

5. Dockingstation nach einem der Ansprüche 2 bis 4,
**dadurch gekennzeichnet, dass** die Funkantenne (15) des Funkmoduls (13) innerhalb des Gehäuses (8) angeordnet ist.

6. Dockingstation nach einem der Ansprüche 1 bis 5,
**dadurch gekennzeichnet, dass** der in der Dockingstation (1) angeordnete Computer (10) mit einem ersten Betriebssystem und das Funkmodul (13) mit einem zweiten Betriebssystem betrieben ist.

7. Dockingstation nach Anspruch 6,
**dadurch gekennzeichnet, dass** das erste Betriebssystem ein WINDOWS Betriebssystem ist und das zweite Betriebssystem ein LINUX Betriebssystem ist.

8. Dockingstation nach Anspruch 6 oder 7,
**dadurch gekennzeichnet, dass** die Betriebssysteme auf einem MultiCore Prozessor (11) ablaufen.

9. Dockingstation nach Anspruch 8,
**dadurch gekennzeichnet, dass** auf einem ersten Core (a, b, c, d) das erste Betriebssystem und auf einem zweiten Core (a, b, c, d) das zweite Betriebssystem läuft.

10. Dockingstation nach einem der Ansprüche 1 bis 9,
**dadurch gekennzeichnet, dass** die Dockingstation (1) über einen Netzwerkanschluss (25) mit einem Server (18) in Verbindung steht.

11. Dockingstation nach einem der Ansprüche 1 bis 10,
**dadurch gekennzeichnet, dass** das Gehäuse (8) staub- und feuchtigkeitsdicht, insbesondere nach Schutzklasse IP65 ausgeführt ist.

12. Dockingstation nach Anspruch 11,
**dadurch gekennzeichnet, dass** die Dockingstation (1) einen Gebläseschacht (31) aufweist, der von Kühlluft (32) durchströmt ist, und die Wärme innerhalb des dichten Gehäuses (8) über den Gebläseschacht (31) abgeführt ist.

13. Dockingstation nach Anspruch 12,
**dadurch gekennzeichnet, dass** die zu kühlenden Bauteile und/oder Baugruppen innerhalb des Gehäuses (8) über eine Heatpipe (30) mit dem Gebläseschacht (31) verbunden sind.

14. Dockingstation nach einem der Ansprüche 1 bis 13,
**dadurch gekennzeichnet, dass** im Gehäuse (8) eine RAID-Plattenanordnung vorgesehen ist.
